# EUROPÄISCHE PATENTSCHRIFT

(11) **EP 3 524 402 B1**
(45) Veröffentlichungstag und Bekanntmachung des Hinweises auf die Patenterteilung: **11.08.2021**
(21) Anmeldenummer: 18210516.3
(22) Anmeldetag: 05.12.2018
(51) Int. Cl.: B29C 45/28, B29C 45/27, B29K 21/00

(54) **NADELVERSCHLUSSDÜSE MIT SEPARATEM NADELKANAL UND SCHMELZEKANAL**
NEEDLE SHUT-OFF NOZZLE WITH A SEPARATE NEEDLE CHANNEL AND MELT CHANNEL
BUSE DE FERMETURE À AIGUILLE ACTIONNÉE POURVUE DE CANAL D'AIGUILLE SÉPARÉ ET DE CANAL DE FUSION

(30) Priorität: 09.02.2018 DE 102018102970
(43) Veröffentlichungstag der Anmeldung: 14.08.2019
(73) Patentinhaber: Günther Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Patentanwälte Olbricht Buchhold Keulertz

(56) Entgegenhaltungen:
- DE-A1- 19 503 073
- DE-A1-102012 101 754
- JP-A- 2002 283 403
- US-A- 5 895 669
- US-A1- 2008 258 342

## Beschreibung

Die Erfindung betrifft gemäß dem Oberbegriff von Anspruch 1 eine Nadelverschlussdüse mit einem zweigeteilten Materialrohr, das einen oberen Materialrohrabschnitt und einen unteren Materialrohrabschnitt, sowie einen separaten Nadelkanal und einen separaten Schmelzekanal aufweist.

Spritzgießdüsen, insbesondere Nadelverschlussdüsen sind allgemein bekannt. Sie werden in Spritzgießwerkzeugen eingesetzt, um eine fließfähige Masse bei einer vorgebbaren Temperatur unter hohem Druck einem trennbaren Werkzeugblock (Formnest) zuzuführen. Damit die fließfähige Masse nach dem Spritzvorgang nicht weiter aus der Spritzgießdüse austritt, sind Verschlussnadeln in den Nadelverschlussdüsen vorgesehen, die eine Angussöffnung der Nadelverschlussdüse verschließen.

Die Verschlussnadeln werden im Zentrum des Schmelzekanals geführt, wobei die fließfähige Masse parallel zu der im Schmelzekanal verlaufenden Verschlussnadel geleitet wird.

Eine Spritzgieß-Verarbeitung für duroplastische Kunststoffe unterscheidet sich zu der Verarbeitung von thermoplastischen Kunststoffen dadurch, dass Duroplaste bei Überschreiten einer Grenztemperatur aushärten, jedoch gleichzeitig auf eine gewisse Temperatur temperiert werden müssen. Daher ist das Einhalten eines genauen Temperaturfensters, oftmals wenige 10 °C, für ein qualitativ gutes Ergebnis essenziell. Durch hohe Füllstoffanteile weisen Duroplaste eine hohe Viskosität auf. Da eine Steuerung der Viskosität über die Temperatur der fließfähigen Masse wegen der oben beschriebenen Temperaturabhängigkeit nicht oder nur sehr eingeschränkt möglich ist, müssen die für eine Nadelverschlussdüse benötigten Verschlusskräfte durch einen besonders starken Antrieb der Verschlussnadel bereitgestellt werden.

Dies trifft in gewissem Maße auch für bestimmte Heißkanal-Verarbeitungsverfahren - etwa beim Spritzgießen von Keramik- oder Metallpulvern - zu. Bei diesen Verfahren wird ein Metall- oder Keramikpulver zunächst mit einem thermoplastischen, polymeren Bindemittel versetzt. Bereits geringe Temperaturschwankungen im Spritzgießwerkzeug, insbesondere innerhalb der verwendeten Nadelverschlussdüse, können die Entmischung von Pulver und Binder erheblich beeinflussen, was im späteren Verfahren erhebliche Probleme bereiten kann. Die fließfähige Masse, die in solchen Verfahren eingesetzt wird, ist zähflüssig.

Für eine Temperierung von Heißkanaldüsen sieht die DE 10 2010 020 077 A1 vor, dass in einem Materialrohr parallel zu einem Schmelzekanal ein Hohlraum vorhanden ist, durch den von einem Zulauf in Richtung eines Ablaufs ein Fluid als Wärmeträger strömt. Somit ist die Temperatur der Heißkanaldüse innerhalb eine besonders geringen Schwankungsbreite einstellbar.

WO 98/56557 A1 sieht für eine Nadelverschlussdüse vor, dass eine Verschlussnadel weitestgehend separiert von der Schmelze zu führen. Hierfür weist eine entsprechend ausgestaltete Nadelverschlussdüse einen Schmelzekanal und einen zunächst separat verlaufenden Nadelkanal auf, wobei der Schmelzekanal und der Nadelkanal im Bereich der Düsenspitze in einer Vorkammer zusammenlaufen.

US 5 895 669 offenbart beispielsweise eine Formbuchse zum Einspritzen von Kunststoffmaterial in einen Formhohlraum. Das Buchsenelement hat ein einteiliges Körperelement mit einem zentralen Durchgang für ein Absperrstiftelement und einen separaten und getrennten Durchgang für das geschmolzene Kunststoffmaterial. Ein Spitzenelement ist am Ende des Körperelements positioniert und hat eine Materialausstoßkammer. Ein Anschnitt oder eine Öffnung, die durch das Stiftelement geöffnet und geschlossen wird, befindet sich entweder im Spitzenelement oder in der Form. Ein Verschleißbuchsenelement ist in der Entladungskammer oder am Ende des Körperelements positioniert und dient dazu, das Ende des Stiftelements zu stützen und den Fluss von Kunststoffmaterial in den zentralen Durchgang zu verhindern. Das Körperelement wird durch ein ringförmig gegossenes Heizelement oder ähnliches beheizt. Das Verschleißbuchsenelement kann zur korrekten Positionierung relativ zum Körperelement und dem Kunststoff-Flusskanal indexiert werden. Das Verschleißbuchsenelement hat vorzugsweise einen Körperabschnitt, der die Auslasskammer im Spitzenelement teilweise ausfüllt.
US 2008/0258342 A1 beschreibt eine Spritzgussvorrichtung, das eine Ventilträgerstruktur mit einem inneren Kanal zum Leiten eines Flusses von geschmolzenem Harz zu einem Formhohlraum umfasst. Ein erster Ventilaktuator wird von der Ventilstützstruktur getragen und ist operativ mit einem Ventilschaft verbunden. Der Ventilschaft erstreckt sich zumindest teilweise durch eine Ventilöffnung durch den inneren Kanal. Eine Buchse ist in der Ventilöffnung angebracht. Ein zweiter Ventilstellantrieb befindet sich neben dem ersten Ventilstellantrieb. Das zweite Ventilstellglied ist mit einem Hülsenelement mit einem hohlen Innenraum verbunden, der so bemessen ist, dass er gleitend in den Ventilschaft eingreift, und weist eine Außenfläche auf, die für eine Gleitbewegung in der Buchse bemessen ist. Der zweite Ventilstellantrieb bewegt das Hülsenelement selektiv zwischen einer zurückgezogenen Position, in der sich das Hülsenelement auf die Buchse zu bewegt, und einer ausgefahrenen Position, in der sich die Hülse von der Buchse wegbewegt.

DE 10 2012 101 754 A1 betrifft eine Spritzgießdüse für eine Spritzgießvorrichtung zum Verarbeiten eines fließfähigen Materials, mit einem Düsenkörper, der ein hinteres Ende und ein vorderes Ende aufweist, wobei wenigstens zwei Verschlussnadeln den Düsenkörper vom hinteren Ende zum vorderen Ende durchdringen und eine Schmelzeführung vom hinteren Ende zum vorderen Ende des Düsenkörpers führt. Dabei ist eine Heizvorrichtung am Düsenkörper angeordnet und für jede Verschlussnadel ist eine separate Führungsbuchse am vorderen Ende des Düsenkörpers angeordnet. Jede Führungsbuchse weist eine axial zur jeweils zugehörigen Ventilnadel ausgerichtete Durchgangsöffnung zur Aufnahme der jeweiligen Verschlussnadel auf. Die Schmelzeführung ist so ausgebildet, dass sie in die Durchgangsöffnungen mündet. Dabei weist jede Führungsbuchse eine die Durchgangsöffnung radial umfassende Dichtfläche auf, die dichtend zu einer Angussöffnung in der Formangussplatte anordenbar ist.
Aufgabe der Erfindung ist es, eine Heißkanaldüse dahingehend zu verbessern, dass eine in der Heißkanaldüse verlaufende Verschlussnadeln zuverlässig und leichtgängig geführt ist. Weiterhin ist es die Aufgabe der Erfindung, sicherzustellen, dass die Schmelze, insbesondere für die Verarbeitung von Duroplasten, entlang des Düsenkörpers optimal temperiert wird. Ferner soll eine Nadelverschlussdüse bereitgestellt werden, die platzsparend ist, verschleißarm, leicht zu warten und einfach, sowie kostengünstig herzustellen ist.

Hauptmerkmale der Erfindung sind im kennzeichnenden Teil von Anspruch 1 angegeben. Ausgestaltungen sind Gegenstand der Ansprüche 2 bis 15.

Bei einer Nadelverschlussdüse für ein Spritzgießwerkzeug, aufweisend ein zweigeteiltes Materialrohr mit einem oberen Materialrohrabschnitt, der sich von einem oberen Ende der Nadelverschlussdüse in einer Längsrichtung in Richtung eines unteren Endes erstreckt, und mit einem unteren Materialrohrabschnitt, der sich in Längsrichtung zwischen dem oberen Materialrohrabschnitt und dem unteren Ende der Nadelverschlussdüse erstreckt, wobei der untere Materialrohrabschnitt mittels Befestigungsmitteln mit dem oberen Materialrohrabschnitt lösbar verbunden ist und der untere Materialrohrabschnitt von dem oberen Materialrohrabschnitt über das untere Ende entnehmbar ist, wobei in dem Materialrohr in Längsrichtung ein Nadelkanal verläuft, in dem eine Verschlussnadel längsverschieblich angeordnet ist, und wobei in dem Materialrohr in Längsrichtung und zumindest abschnittsweise separat von dem Nadelkanal ein Schmelzekanal verläuft, sieht die Erfindung vor, dass in dem unteren Materialrohrabschnitt ein Führungseinsatz für die Verschlussnadel angeordnet ist, welcher den Nadelkanal in Längsrichtung fortsetzt, dass der Führungseinsatz im unteren Materialrohrabschnitt mit dem Schmelzekanal strömungsverbunden ist, und dass der Führungseinsatz an seinem freien Ende einen eine Angussöffnung bildenden Dichtabschnitt aufweist, der durch die Verschlussnadel formschlüssig abdichtbar ist.

Auf diese Weise wird der Verlauf des Schmelzekanals weitestgehend vom Verlauf der Verschlussnadel getrennt, wodurch die Verschlussnadel innerhalb des Materialrohrs bis auf den unteren Abschnitt der Nadelverschlussdüse, in dem sich der Führungseinsatz befindet, weitestgehend kontaktfrei zu der fließfähige Masse geführt ist. So wird Reibung zwischen der Verschlussnadel und der fließfähige Masse vermieden. Eine wichtige Ausgestaltung sieht daher vor, dass der Schmelzekanal in dem oberen Materialrohrabschnitt in Längsrichtung verläuft und in dem unteren Materialrohrabschnitt in einen Zuführungskanal übergeht, der radial auf den Nadelkanal, der in dem Führungseinsatz fortgesetzt ist, zuläuft.

Dadurch, dass die Schmelze in einem separaten Schmelzekanal verläuft, ist die Schmelze genau temperierbar, weil sich in einem gegebenen Volumen nur das fließfähige Material und nicht etwa eine Verschlussnadel befindet. Zudem kann der Schmelzekanal räumlich besonders nah an eine Temperiervorrichtung gelegt werden. Somit ist die Schmelze mit einem geringen zeitlichen Verzug temperierbar.

Durch das Vorsehen eines Materialrohrs, das in einen oberen und einen unteren Materialrohrabschnitt zweigeteilt ist, ergibt sich weiterhin der Vorteil, dass der untere Materialrohrabschnitt als Bereich, der bei jedem Spritzgussvorgang einem erhöhten Verschleiß durch das Einfahren in das Formnest ausgesetzt ist, leicht austauschbar ist. Zudem sind durch die Zweiteilung für den oberen Materialrohrabschnitt und den unetren Materialrohrabschnitt optional unterschiedliche Materialien vorsehbar, wodurch die Verschleißfestigkeit und/oder die Wärmeübertragung des entsprechenden Materialrohrabschnitts verbessert werden kann.

Dadurch, dass der untere Materialrohrabschnitt an dem unteren Ende der Nadelverschlussdüse angeordnet ist, ist dieser leicht entnehmbar, ohne, dass die Nadelverschlussdüse komplett demontiert werden muss. Dementsprechend ist gemäß einer Ausgestaltung der Erfindung vorgesehen, dass der untere Materialrohrabschnitt mittels Befestigungsmitteln an dem oberen Materialrohrabschnitt befestigt ist. In einer bevorzugten Ausführungsform sind die Befestigungsmittel von einem unteren Ende der Nadelverschlussdüse her lösbar. Durch die Demontage des unteren Materialrohrabschnitts ist zudem ein Auswechseln der Verschlussnadel von unten, also ohne Demontage der kompletten Nadelverschlussdüse möglich. Auf diese Weise sind alle verschleißbehafteten, zu dem Verschluss der Nadelverschlussdüse gehörenden Teile leicht austauschbar. Dadurch ergeben sich geringe Stillstandzeiten einer Spritzgießanlage.

Durch das Vorsehen eines separaten Führungseinsatzes, der in dem unteren Materialrohrabschnitt formschlüssig einliegt, wird die Nadelverschlussdüse weiterhin hinsichtlich der Verschleißeigenschaften verbessert. Mechanische Beanspruchungen, die während des Spritzgießvorgangs, etwa durch das Einfahren der Nadelverschlussdüse in ein Formwerkzeug bzw. durch die Betätigung der Verschlussnadel auftreten, werden zumindest teilweise durch den Führungseinsatz aufgefangen. Somit tritt Verschleiß, der auf diese mechanischen Beanspruchungen zurückzuführen ist, vorwiegend an dem Führungseinsatz auf. Im Verschleißfall ist also gegebenenfalls nur der Führungseinsatz auszutauschen, während der unteren Materialrohrabschnitt weiterverwendet werden kann. Dies spart Ressourcen und vereinfacht die Wartung. Zudem ist der Führungseinsatz in einer bevorzugten Ausführungsform in einem weiteren Material ausgestaltbar. Hieraus ergeben sich, je nach Einsatzzweck und Wahl des Materials, weitere Vorteile, etwa hinsichtlich der Verschleißfestigkeit und/oder der Wärmeübertragung.

In einer weiteren Ausgestaltung ist vorgesehen, dass der Führungseinsatz einen Führungsabschnitt aufweist, in dem die Verschlussnadel zumindest teilweise geführt ist. Dadurch, dass die Verschlussnadel in dem Führungsabschnitt des Führungseinsatzes geführt wird, ist die Verschlussnadel besonders zuverlässig mit dem Dichtabschnitt der Angussöffnung in Eingriff bringbar. So wird in vorteilhafter Weise vermieden, dass die Verschlussnadel mit dem Dichtabschnitt außer Flucht liegt. Auf diese Weise wird ein Verschleiß der Verschlussnadel und des Führungseinsatzes im Bereich des Dichtabschnitts vermindert.

In einer weiteren optionalen Ausgestaltung der Erfindung ist vorgesehen, dass der Führungseinsatz in Längsrichtung zwischen dem Führungsabschnitt und dem Dichtabschnitt eine Mündung für den Schmelzekanal bzw. den Zuführungskanal in den Nadelkanal aufweist.

Dadurch, dass die Verschlussnadel oberhalb der Mündung des Schmelzekanals geführt wird, ist die Verschlussnadel besonders zuverlässig mit dem Dichtabschnitt der Angussöffnung in Eingriff bringbar. So wird in vorteilhafter Weise vermieden, dass die Verschlussnadel mit dem Dichtabschnitt außer Flucht liegt. Dadurch wird ein Verschleiß der Verschlussnadel und des Führungseinsatzes im Bereich des Dichtabschnitts vermindert.

In einer weiteren Ausbildung der Erfindung ist vorgesehen, dass die Verschlussnadel zwischen der Schließstellung und einer Offenstellung einen Hub aufweist, der mindestens der Erstreckung des Dichtabschnitts und der Mündung des Schmelzekanals in Längsrichtung entspricht. So kann sichergestellt werden, dass die Verschlussnadel während eines Spritzgießvorgangs außerhalb des Schmelzeflusses gehalten wird. Auf diese Weise werden Verwirbelungen des fließfähigen Materials bzw. der Schmelze verhindert, was sich positiv auf das Spritzgussergebnis auswirkt.

Ergänzend dazu sieht die Erfindung vor, dass der Führungsabschnitt den Nadelkanal gegenüber der Angussöffnung abdichtet. Durch eine zusätzliche Abdichtung des Nadelkanals im Bereich des Führungsabschnitts wird sichergestellt, dass keine Schmelze in den Nadelkanal eintritt. Auf diese Weise wird eine Verklebung des Nadelkanals vermieden, insbesondere dann, wenn der Nadelkanal nicht gesondert temperiert wird. Durch die Dichtung wird also die Reibung innerhalb des Nadelkanals gering gehalten. Dementsprechend ist vorgesehen, dass in dem in Längsrichtung verlaufenden Führungsabschnitt eine Dichtungsgeometrie vorhanden ist.

In einer Weiterbildung ist vorgesehen, dass der obere Materialrohrabschnitt und der untere Materialrohrabschnitt ein wärmeleitfähiges Material aufweisen. Durch das Vorsehen eines wärmeleitfähiges Materials, insbesondere eines hoch wärmeleitfähigen Materials, kann sichergestellt werden, dass die Wärme einer Temperiervorrichtung der Nadelverschlussdüse besonders effizient dem Schmelzekanal und insbesondere der Schmelze bzw. der fließfähige Masse zugeleitet werden kann. Somit kann die Schmelze bzw. die fließfähige Masse auf der gewünschten und für den Spritzgießprozess optimalen Temperatur gehalten werden.

In einer Ausbildung ist vorgesehen, dass der Führungseinsatz einen Anlageflansch aufweist, der in einer Anlageausnehmung des unteren Materialrohrabschnitts einliegt. Durch das Vorsehen einer Anlageausnehmung in dem unteren Materialrohrabschnitt und eines entsprechenden Anlageflansches an dem Führungseinsatz kann der Führungseinsatz zwischen dem unteren Materialrohrabschnitt und dem oberen Materialrohrabschnitt gehalten werden. Daher ist nach einer bevorzugten Ausführungsform vorgesehen, dass der Führungseinsatz zwischen dem oberen Materialrohrabschnitt und dem unteren Materialrohrabschnitt formschlüssig gehalten ist. Somit wird eine axiale Bewegung des Führungseinsatzes vermieden. Eine weitere optionale konstruktive Maßnahme sieht dementsprechend vor, dass der Anlageflansch des Führungseinsatzes eine abgeflachte Seitenfläche aufweist. Dadurch wird in vorteilhafter Weise eine definierte Einbaulage des Führungseinsatzes hergestellt.

Gemäß einer Weiterbildung ist vorgesehen, dass der Führungseinsatz ein verschleißfestes Material aufweist. Durch das Vorsehen eines verschleißfesten Materials für den Führungseinsatz ist der Vorteil gegeben, dass dieser für eine höhere Anzahl von Spritzgießzyklen einsetzbar ist, ohne, dass ein Austausch erforderlich ist.

Gemäß einer weiteren vorteilhaften Ausgestaltung ist vorgesehen, dass die Verschlussnadel in einer Schließstellung im Bereich des Nadelkanals einen Durchmesser aufweist, der größer ist, als der Durchmesser der Verschlussnadel in dem unteren Materialrohrabschnitt. Auf diese Weise ergibt sich eine erhöhte Stabilität der Verschlussnadel, sodass Verwindungen der Verschlussnadel auch bei zähflüssigen Schmelzen bzw. fließfähigen Massen vermieden werden können. Da die Verschlussnadel im Bereich des Nadelkanals außerhalb des Schmelzestroms bzw. des Stroms der fließfähigen Masse liegt, ist ein erhöhter Durchmesser in dem Bereich des Nadelkanals hinsichtlich der nötigen Verschlusskraft nicht nachteilhaft. Dementsprechend besteht eine Weiterbildung der Erfindung darin, dass die Verschlussnadel einen konisch zulaufenden Abschnitt im Übergangsbereich zwischen dem oberen Materialrohrabschnitt und dem unteren Materialrohrabschnitt hat.

Gemäß einem weiteren Aspekt der Erfindung ist vorgesehen, dass der Nadelkanal und der Schmelzekanal in dem oberen Materialrohrabschnitt exzentrisch angeordnet sind und eine erste Ebene aufspannen. Hieraus ergibt sich der Vorteil, dass der separat ausgeführte Nadelkanal und Schmelzekanal symmetrisch in der Nadelverschlussdüse anordenbar sind. Zudem ergibt sich der Vorteil, dass insbesondere der Schmelzekanal näher an den Außenumfang des oberen Materialrohrabschnitts rückt, sodass der Schmelzekanal in die Nähe einer Temperiervorrichtung rückt. Die Temperiervorrichtung kann beispielsweise an dem Außenumfang des oberen Materialrohrabschnitts angeordnet sein. Somit verbessert sich die Wärmeübertragung zwischen der Temperiervorrichtung und dem Schmelzekanal bzw. der in dem Schmelzekanal befindlichen Schmelze bzw. fließfähige Masse.

Ein weiterer Aspekt der Erfindung sieht vor, dass der obere Materialrohrabschnitt mindestens eine in Längsrichtung verlaufende Abflachung aufweist, die senkrecht zu der ersten Ebene steht. Durch die Abflachung rückt der Schmelzekanal, der sich bevorzugt in der ersten Ebene befindet, in vorteilhafter Weise näher an den Außenumfang des oberen Materialrohrabschnitts, wodurch eine Temperierung durch eine außerhalb des Materialrohrabschnitts angeordnete Temperiervorrichtung erleichtert wird.

In einer Weiterbildung der Erfindung ist vorgesehen, dass eine erste Abflachung einen ersten Temperierraum in der Nadelverschlussdüse ausbildet. Bevorzugt ist dieser Temperierraum mittels eines Fluids temperierbar. Durch die Abflachung ist eine Nähe zu dem Schmelzekanal gegeben, sodass die in dem Temperierraum vorhandene Wärme direkt an den Schmelzekanal abgegeben werden kann.

Gemäß einer weiteren Ausgestaltung der Erfindung ist vorgesehen, dass der erste Temperrierraum senkrecht zur Längsrichtung von dem oberen Materialrohrabschnitt und von einer Hülse begrenzt wird. Bevorzugt bildet die Hülse einen Außenmantel der Nadelverschlussdüse. Auf diese Weise ist der obere Materialrohrabschnitt einfach herstellbar, da lediglich die Abflachung vorgesehen werden muss. Der Temperierraum wird durch den oberen Materialrohrabschnitt und die Hülse ausgebildet. In einer bevorzugten Ausführungsform reichen Teile des oberen Materialrohrabschnitts in Umfangsrichtung an die Hülse heran, sodass der Temperierraum in Umfangsrichtung von der Hülse und dem oberen Materialrohrabschnitt begrenzt wird.

In einer alternativen Ausgestaltung ist vorgesehen, dass der erste Temperierraum einen ersten Zulauf und einen ersten Ablauf aufweist. Insbesondere, wenn der Temperierraum mittels eines Fluids temperiert wird, kann durch das Vorsehen eines Zulaufs und eines Ablaufs eine Strömung in dem Temperierraum vorgesehen werden. Somit ist eine konstante Versorgung mit Wärme gewährleistet. Dementsprechend ist in einer Ausgestaltung vorgesehen, dass der erste Zulauf einen ersten Fluidverbinder aufweist, der an einem oberen Ende der Nadelverschlussdüse angeordnet ist und der erste Temperrierraum einen ersten Ablauf aufweist, der an einem unteren Ende des oberen Materialrohrabschnitts angeordnet ist.

Ergänzend dazu sieht die Erfindung vor, dass eine zweite Abflachung einen zweiten Temperierraum in der Nadelverschlussdüse ausbildet. In einer bevorzugten Ausführungsform liegt der zweite Temperrierraum dem ersten Temperierraum gegenüber. Dementsprechend ist gemäß einer Ausgestaltung der Erfindung vorgesehen, dass der zweite Temperrierraum parallel zur Längsrichtung von dem oberen Materialrohrabschnitt und von der Hülse begrenzt wird. Durch das Vorsehen eines zweiten Temperierraum das kann die Schmelze in dem Schmelzekanal noch effizienter temperiert werden.

In einer Weiterbildung ist vorgesehen, dass der zweite Temperrierraum einen zweiten Zulauf und einen zweiten Ablauf aufweist. Gemäß einer wichtigen und vorteilhaften Weiterbildung der Erfindung ist vorgesehen, dass der zweite Ablauf einen zweiten Fluidverbinder aufweist, der an einem oberen Ende der Nadelverschlussdüse angeordnet ist und der zweite Temperrierraum einen zweiten Zulauf aufweist, der an einem unteren Ende des oberen Materialrohrabschnitts angeordnet ist. Hieraus ergibt sich der Vorteil, dass durch den zweiten Temperierraum ein Fluidstrom eines Temperierfluids herstellbar ist, der den Schmelzekanal temperiert.

In einer Ausbildung ist vorgesehen, dass der erste Ablauf und der zweite Zulauf strömungsverbunden sind. In einer bevorzugten Ausführungsform sind der erste Ablauf und der zweite Zulauf über einen dritten Temperrierraum strömungsverbunden. Durch das Vorsehen eines dritten Temperierraums, der den ersten Ablauf und den zweiten Zulauf miteinander strömungsverbindet, ist ein Kreislauf eines Temperierfluids zwischen dem ersten Fluidverbinder und dem zweiten Fluidverbinder herstellbar. Somit lässt sich die Temperatur des oberen Materialrohrabschnitts bzw. der Schmelze in dem Schmelzekanal effizient und rasch einstellen bzw. regeln, da durch den Kreislauf des Temperierfluids Wärme rasch zu- oder abführbar ist.

Eine weitere optionale konstruktive Maßnahme sieht vor, dass der dritte Temperrierraum als ein in Umfangsrichtung verlaufender Ringraum ausgebildet ist, der zwischen dem unteren Materialrohrabschnitt und einer Anspritzhülse angeordnet ist. Hieraus ergibt sich der Vorteil, dass der untere Materialrohrabschnitt ebenso wie der obere Materialrohrabschnitt über ein in dem dritten Temperierraum strömendes Temperierfluids temperierbar ist. Somit wird auch das untere Ende der Nadelverschlussdüse temperiert, sodass auch hier und insbesondere an der Angussöffnung eine geregelte Temperatur einstellbar ist.

In einer alternativen Ausgestaltung ist vorgesehen, dass in dem unteren Materialrohrabschnitt ein dritter Temperrierraum separat zu dem ersten Temperrierraum und/oder zu dem zweiten Temperrierraum ausgebildet ist. Durch die separate Ausführung des dritten Temperrierraums zu dem ersten und/oder zweiten Temperrierraum ist die Temperatur im unteren Materialrohrabschnitt und somit die Temperatur der Schmelze in unmittelbarer Nähe zur Angussöffnung in vorteilhafter Weise separat regelbar.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Schnitt durch die Nadelverschlussdüse entlang der Längsachse,
- Fig. 2: einen Schnitt durch die Nadelverschlussdüse entlang der Längsachse senkrecht zu der Darstellung von Fig. 1,
- Fig. 3: einen weiteren Schnitt durch die Nadelverschlussdüse entlang der Längsachse.

Sofern nicht anders angegeben, beziehen sich die folgenden Bezugszeichen auf alle angegebenen Figuren.

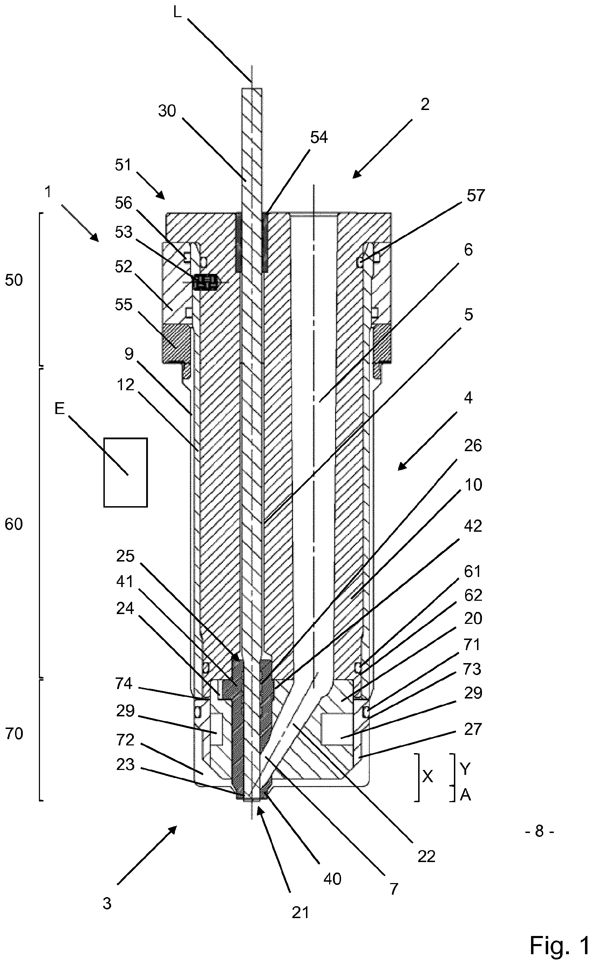

Figur 1 zeigt einen Schnitt durch die Nadelverschlussdüse 1 entlang der Längsachse L. Die Nadelverschlussdüse 1 weist ein oberes Ende 2 und ein unteres Ende 3 auf. Ferner weist die Nadelverschlussdüse 1 ein Materialrohr 4 auf, das einen oberen Materialrohrabschnitt 10 und einen unteren Materialrohrabschnitt 20 aufweist.

Der obere Materialrohrabschnitt 10 erstreckt sich von dem oberen Ende 2 entlang der Längsachse L in Richtung des unteren Endes 3. Entlang der Längsachse L schließt sich in einer Richtung von dem oberen Ende 2 in Richtung des unteren Endes 3 an den oberen Materialrohrabschnitt 10 der untere Materialrohrabschnitt 20 an.

Die Nadelverschlussdüse 1 ist im Wesentlichen zylinderförmig. Gleiches gilt für das in den oberen Materialrohrabschnitt 10 und den unteren Materialrohrabschnitt 20 zweigeteilte Materialrohr 4.

In dem Materialrohr 4 läuft in Längsrichtung L ein Nadelkanal 5. Parallel zu dem Nadelkanal 5 läuft im Bereich des oberen Materialrohrabschnitt 10 ein Schmelzekanal 6. Der Schmelzekanal 6 und der Nadelkanal 5 spannen eine erste Ebene E auf.

Der Nadelkanal 5 setzt sich in dem unteren Materialrohrabschnitt 20 fort und endet in einer Angussöffnung 21. Innerhalb des Nadelkanals 5 ist eine Verschlussnadel 30 angeordnet. Die Verschlussnadel 30 ist entlang der Längsachse L bewegbar.

Der Schmelzekanal 6 setzt sich in dem unteren Materialrohrabschnitt 20 in Form eines zu Führungskanals 22 fort. Der Zuführungskanal 22 verläuft sowohl in Längsrichtung L, als auch in Richtung des Nadelkanals 5 und setzt den Schmelzekanal 6 fort. Der Schmelzekanal 6 mündet auf diese Weise mit einer Mündung 7 in dem Nadelkanal 5.

Der untere Materialrohrabschnitt 20 weist im Bereich der Angussöffnung 21 einen Dichtabschnitt 23 auf, wobei die Verschlussnadel 30 in einer Schließstellung in den Dichtabschnitt 23 eingreift und diesen formschlüssig abdichtet. Auf diese Weise ist die Nadelverschlussdüse 1 verschlossen, sodass keine fließfähige Masse bzw. Schmelze mehr durch den Schmelzekanal 6 über die Mündung 7 durch die Angussöffnung 21 aus der Nadelverschlussdüse 1 hinaus fließen kann.

Ein Teil des unteren Materialrohrabschnitts 20 ist ein Führungseinsatz 40, in dem die Angussöffnung 21 und der Dichtabschnitt 23 angeordnet sind. Der Führungseinsatz 40 ist in dem unteren Materialrohrabschnitt 20 im Bereich des Nadelkanals 5 eingesetzt und setzt den Nadelkanal 5 vom oberen Materialrohrabschnitt 10 her in Richtung des unteren Endes 3 bzw. der Angussöffnung 21 fort. Der Schmelzekanal 6 ist durch den Führungseinsatz 40 über den Zuführungskanal 22 fortgesetzt, wobei die Durchführung des Zuführungskanals 22 durch den Führungseinsatz 40 die Mündung des Schmelzekanals 6 in den Nadelkanal 5 darstellt.

Der Führungseinsatz 40 weist einen Anlageflansch 41 mit einer abgeflachten Seitenfläche 42 auf. Der Anlageflansch 41 liegt in einer Anlageausnehmung 24 des unteren Materialrohrabschnitts 20 ein. Der Führungseinsatz 40 ragt weiterhin in Richtung des oberen Endes 2 entlang der Längsachse L in den oberen Materialrohrabschnitt 10 hinein. Somit ist der Führungseinsatz 40 zwischen dem oberen Materialrohrabschnitt 10 und dem unteren Materialrohrabschnitt 20 formschlüssig gehalten. Durch den Anlageflansch 41 mit der abgeflachten Seitenfläche 42 ist der Führungseinsatz 40 sowohl axial entlang der Längsachse L als auch in Umfangsrichtung festgelegt.

Die Verschlussnadel 30 liegt in dem Nadelkanal 5 ein und ist in dem Nadelkanal 5 axial entlang der Längsachse L verschiebbar. Im Bereich des unteren Endes 3 der Nadelverschlussdüse 1 ist die Verschlussnadel 30 mittels eines in dem Führungseinsatz 40 ausgebildeten Führungsabschnitts 25 geführt. Zur Abdichtung des Schmelzekanals 6 gegenüber dem Nadelkanal 5, insbesondere in dem Bereich des Nadelkanals 5, der in dem oberen Materialrohrabschnitt 10 liegt, weist der untere Materialrohrabschnitt 20 im Bereich des Führungsabschnitts 25 des Führungseinsatzes 40 eine Dichtungsgeometrie 26 auf. Die Dichtungsgeometrie 26 dichtet den Nadelkanal 5 gegenüber der Schmelze bzw. der fließfähigen Masse ab.

Der Bereich der Verschlussnadel 30, der im oberen Materialrohrabschnitt 10 liegt weist einen größeren Durchmesser auf als der Bereich der Verschlussnadel 30, der in einer Schließstellung im Bereich des unteren Materialrohrabschnitts 20 liegt. Im Übergangsbereich zwischen dem unteren Materialrohrabschnitt 20 und dem oberen Materialrohrabschnitt 10 weist die Verschlussnadel 30 einen konisch zulaufenden Bereich zur Reduzierung des Verschlussnadeldurchmessers auf.

In einer Offenstellung ist die Verschlussnadel 30 in Richtung des oberen Endes 2 so weit in den Nadelkanal 5 verschoben, dass die Mündung 7 von der Verschlussnadel 30 freigegeben ist. Somit ist der Schmelzekanal 6 mit der Angussöffnung 21 in Strömungsverbindung, wobei die Strömungsverbindung zwischen dem Nadelkanal 5 und dem Schmelzekanal 6 über die Dichtungsgeometrie 26 in dem Führungsabschnitt 25 stets unterbrochen ist.

Die Nadelverschlussdüse 1 ist im Bereich des oberen Materialrohrabschnitts 10 von einer Hülse 12 umgeben. Im Bereich des unteren Materialrohrabschnitts 20 ist die Nadelverschlussdüse 1 von einer Anspritzhülse 27 umgeben.

Der obere Materialrohrabschnitt 10 und der untere Materialrohrabschnitt 20 weisen ein wärmeleitfähiges Material auf. Der Führungseinsatz 40 weist ein verschleißfestes Material auf.

Der dritte Temperrierraum 29 ist als in Umfangsrichtung umlaufende Durchmesserreduzierung bzw. Abflachung in dem unteren Materialrohrabschnitt 20 ausgebildet, wobei der untere Materialrohrabschnitt 20 durch die Anspritzhülse 27 radial nach außen begrenzt ist, wodurch der dritte Temperrierraum 29 ausgebildet ist. Der dritte Temperrierraum 29 erstreckt sich in Umfangsrichtung einmal um den unteren Materialrohrabschnitt 20.

Über den ersten Temperierraum 14, den ersten Ablauf 17, den dritten Temperierraum 29, den zweiten Zulauf 16a und den zweiten Temperierraum 14a ist eine Strömungsverbindung zwischen dem ersten Fluidverbinder 15 und dem zweiten Fluidverbinder 15a gegeben. Auf diese Weise kann ein Temperierfluid durch die Nadelverschlussdüse 1 zirkulieren. Das Temperierfluid kann hierbei insbesondere den oberen Materialrohrabschnitt 10 und die den unteren Materialrohrabschnitt 20 temperieren, wobei der obere Materialrohrabschnitt 10 und der untere Materialrohrabschnitt 20 Wärme an den Schmelzekanal 6 bzw. den Zuführungskanal 22 und die Angussöffnung 21 abgeben. Auf diese Weise ist die Schmelze bzw. die fließfähige Masse temperiert.

Die Nadelverschlussdüse 1 weist einen Kopfbereich 50, einen oberen Bereich 60 und einen unteren Bereich 70 auf. In dem Kopfbereich 50 ist der obere Materialrohrabschnitt 10 angeordnet, der an dem oberen Ende 2 der Nadelverschlussdüse 1 flanschartig ausgebildet ist. Der obere Materialrohrabschnitt 10 weist an dem oberen Ende 2 einen radial nach außen stehenden Flanschbereich 51 auf.

Unterhalb des radial nach außen stehenden Flanschbereich 51 ist ein oberes Gehäuse 52 radial außerhalb des oberen Materialrohrabschnitts 10, in dem der radial nach außen stehende Flanschbereich 51 nicht liegt, angeordnet. Zwischen dem oberen Gehäuse 52 und dem oberen Materialrohrabschnitt 10 ist die Hülse 12 angeordnet. Im Kopfbereich 50 ist die Hülse mittels einer Fixierung 53 mit dem oberen Materialrohrabschnitt 10 verbunden, bevorzugt verschraubt. Die Fixierung 53 ist bevorzugt als Madenschraube ausgebildet.

In dem Bereich des Nadelkanals 5, der in dem Kopfbereich 50 liegt, liegt eine Führungshülse 54 ein. Die Führungshülse weist bevorzugt mehrere, entlang der Längsachse L angeordnete, ringförmige Ausnehmungen auf. Dadurch ergeben sich Führungsflächen, an denen die Verschlussnadel 30 geführt ist. Durch die ringförmigen Ausnehmungen wird die Reibung zwischen der Führungshülse 54 und der Verschlussnadel 30 verringert.

Entlang der Längsrichtung L unterhalb des oberen Gehäuses 52 ist ein Ring 55 angeordnet. Dieser Ring ist bevorzugt aus Titan und weiterhin bevorzugt mittels Verbindungsmitteln 58 (nicht dargestellt) mit dem oberen Gehäuse 52 verbunden. Die Verbindungsmittel 58 (nicht dargestellt) durchragen den Ring 55 parallel zur Längsachse L und greifen in das obere Gehäuse 52 ein.

Der Ring 55 liegt radial nicht an der Hülse 12 an. Zwischen dem Ring 55 und der Hülse 12 ist ein ringförmiger Spalt 9 ausgebildet.

Dieser ringförmige Spalt 9 ist ebenfalls in einem oberen Bereich 60 der Nadelverschlussdüse 1 zwischen der Hülse 12 und einem Formwerkzeug 8 vorhanden. Die Nadelverschlussdüse 1 ist in diesem Formwerkzeug 8 angeordnet.

Der Ring 55 weist von außen gesehen, senkrecht zur Längsachse L, einen radialen Rücksprung auf, wodurch eine Stufe entsteht, mittels derer der Ring 55 in dem Formwerkzeug 8 abgestützt ist.

An dem oberen Gehäuse 52 ist in der Kontaktfläche zu der Hülse 12 mindestens eine radial verlaufende Ringnut 56 ausgebildet. Zwischen dem oberen Materialrohrabschnitt 52 und der Hülse 12 befindet sich im Kopfbereich 50 der Nadelverschlussdüse 1 ein oberer Dichtring 57.

Der Führungsabschnitt 40 erstreckt sich vom oberen Bereich 60 der Nadelverschlussdüse 1 bis hin zum unteren Bereich 70 Nadelverschlussdüse 1, wo der Führungsabschnitt 40 die Angussöffnung 21 bildet. Der Nadelkanal 5, der in dem oberen Materialrohrabschnitt 10 im oberen Bereich 60 der Nadelverschlussdüse 1 verläuft, weist in dem Bereich, in dem der Führungseinsatz 40 in dem Nadelkanal 5 angeordnet ist, einen erhöhten Durchmesser auf.

Oberhalb des Führungseinsatzes 40 verringert sich der Durchmesser des Nadelkanals 5, sodass dieser in Richtung des Kopfbereichs 50 hin konisch zulaufend ist.

Der obere Materialrohrabschnitt 10 ist zur Hülse 12 hin durch einen inneren Dichtring 61 abgedichtet. Der innere Dichtring 61 liegt in einer in den Außenumfang des oberen Materialrohrabschnitts 10 eingebrachten unteren Ringnut 62 ein.

In dem unteren Bereich 70 der Nadelverschlussdüse sind der untere Materialrohrabschnitt 20 und die Anspritzhülse 27 angeordnet. Der Führungseinsatz 40 ist ebenfalls in dem unteren Bereich 70 der Nadelverschlussdüse 1 angeordnet. Die Anspritzhülse 27 ist mittels eines äußeren Dichtrings 71 gegen das Formwerkzeug abgedichtet. Der äußere Dichtring 71 liegt in einer äußeren Ringnut 73, die in dem Außenumfang der Anspritzhülse 27 eingebracht ist, ein. In diesem Bereich, also in dem Bereich in dem der äußere Dichtring 71 angeordnet ist, liegt die Anspritzhülse 27 an dem Formwerkzeug 8 an. In Richtung des unteren Endes 3 verjüngt sich die Nadelverschlussdüse 1, sodass zwischen der Anspritzhülse 27 und dem Formwerkzeug 8 ein Hohlraum 72 ausgebildet ist. Der Führungseinsatz 40 liegt mit zumindest der Angussöffnung 21 wiederum an dem Formwerkzeug 8 an.

Der Hub X der Verschlussnadel 30 entspricht zumindest der Erstreckung Y der Mündung 7 des zu Führungskanals 22 in den Nadelkanal 5 einschließlich des Abstands A der Mündung 7 von der Angussöffnung in Richtung der Längsachse L.

Der untere Materialrohrabschnitt 20 ragt zumindest teilweise in den oberen Materialrohrabschnitt 10 entlang der Längsachse L in Richtung des oberen Endes 2 hinein. Dadurch weist der obere Materialrohrabschnitt 10 an seiner dem unteren Ende 3 zugewandten Seite eine Ausnehmung auf, in der der untere Materialrohrabschnitt 20 zumindest teilweise einliegt. Der obere Materialrohrabschnitt 10 umragt somit den unteren Materialrohrabschnitt 20 zumindest teilweise radial außerhalb.

Die Hülse 12 und der obere Materialrohrabschnitt 10 bilden die in Richtung des unteren Endes 3 liegende Seite des oberen Bereichs 70 der Nadelverschlussdüse 1. Dabei schließen die Hülse 12 und der obere Materialrohrabschnitt 10 in Längsrichtung L in etwa auf derselben Höhe ab. Bevorzugt schließt der obere Materialrohrabschnitt 10 etwas oberhalb des Abschlusses der Hülse 12 ab, sodass zwischen dem oberen Materialrohrabschnitt 10 und der Anspritzhülse 27 ein radial verlaufender Ringspalt 74 ausgebildet ist. Bevorzugt steht die Hülse 12 auf der Anspritzhülse 27 auf.

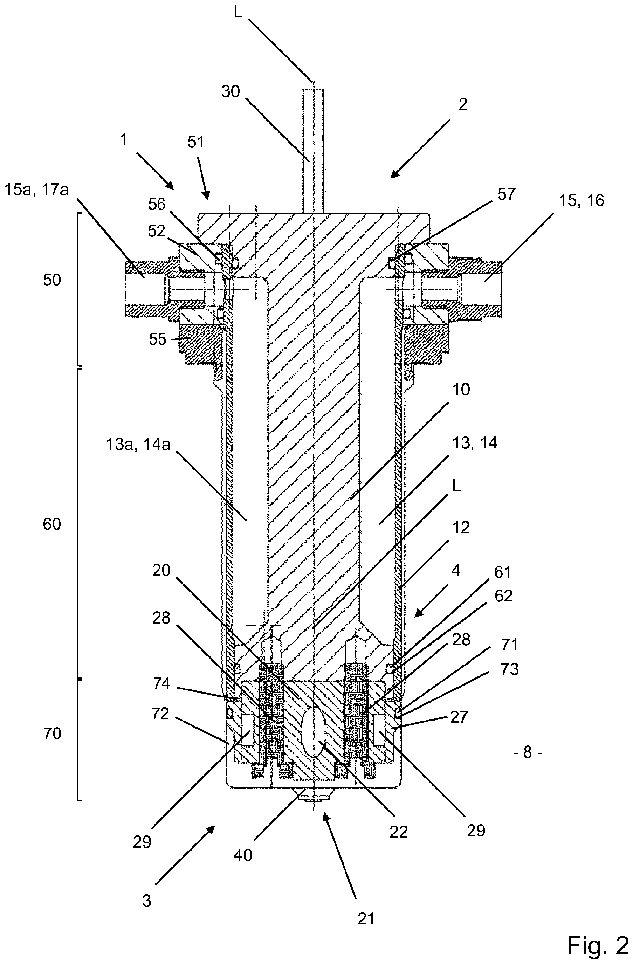

Figur 2 zeigt einen weiteren Schnitt durch die Nadelverschlussdüse 1 entlang der Längsachse L parallel zur ersten Ebene E. Der Schnitt liegt im rechten Winkel zu dem in Figur 1 dargestellten Schnitt. In Figur 2 ist erkennbar, dass der untere Materialrohrabschnitt 20 mittels Befestigungsmitteln 28 mit dem oberen Materialrohrabschnitt 10 lösbar verbunden ist. Die Befestigungsmittel 28 sind von dem unteren Ende 3 her lösbar, sodass der untere Materialrohrabschnitt 20 von dem oberen Materialrohrabschnitt 10 über das untere Ende 3 entnehmbar ist.

Ferner ist in der Schnittansicht gemäß Figur 2 zu erkennen, dass der obere Materialrohrabschnitt 10 einen sanduhrförmigen Querschnitt aufweist. Zwischen der Hülse 12 und dem oberen Materialrohrabschnitt 10 ist eine erste Abflachung 13 und eine zweite Abflachung 13a angeordnet die erste Abflachung 13 bildet einen ersten Temperierraum 14 aus und die zweite Abflachung 13a bildet einen zweiten Temperierraum 14a aus.

Der erste Temperrierraum 14 und der zweite Temperrierraum 14a weisen jeweils einen ersten Fluidverbinder 15 und einen zweiten Fluidverbinder 15a auf, wobei der erste Fluidverbinder 15 einen ersten Zulauf 16 in den ersten Temperierraum 14 darstellt und der zweite Fluidverbinder 15a einen zweiten Ablauf 17a aus dem zweiten Temperierraum 14a darstellt.

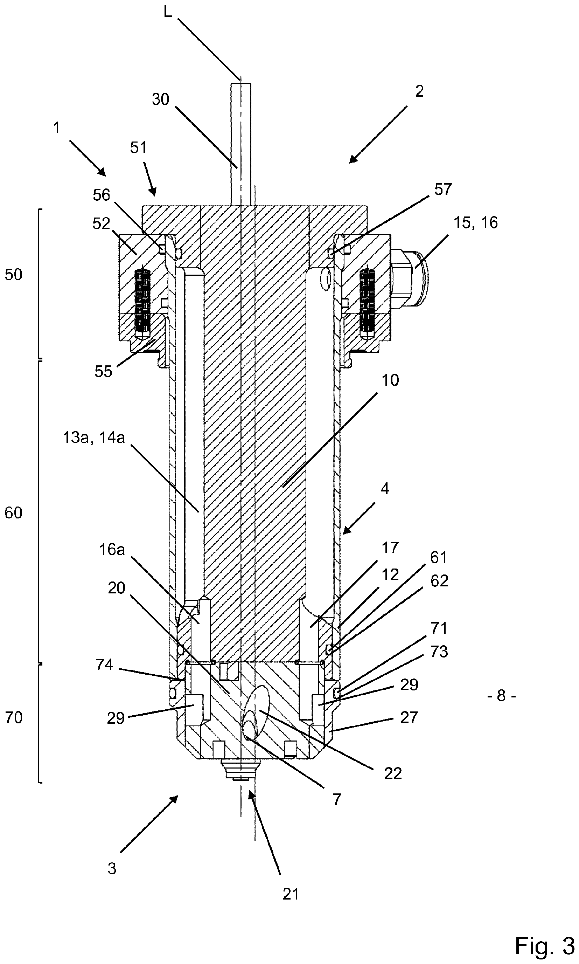

In Figur 3 ist ein weiterer Schnitt entlang der Längsachse L durch die Nadelverschlussdüse 1 dargestellt. Hier sind wieder der erster Temperrierraum 14 und der zweiter Temperrierraum 14a erkennbar. Der erster Temperrierraum 14 ist über einen erster Ablauf 17 mit einem dritter Temperierraum 29, der in dem unteren Materialrohrabschnitt 20 ausgebildet ist, strömungsverbunden. Der dritte Temperrierraum 29 weist weiterhin eine Strömungsverbindung über einen zweiter Zulauf 16a mit dem zweiten Temperierraum 14a auf.

Die Erfindung ist nicht auf eine der vorbeschriebenen Ausführungsformen beschränkt, sondern in vielfältiger Weise abwandelbar. Insbesondere ist es möglich, die vorbeschriebe Nadelverschlussdüse als Kaltkanaldüse oder als Heißkanaldüse einzusetzen. In letzterem Fall versteht sich von selbst, dass die verwendeten Dichtungen entsprechend temperaturbeständig ausgeführt sind.

Man erkennt, dass eine Nadelverschlussdüse 1 ein zweigeteiltes Materialrohr 4 aufweist, das einen oberen Materialrohrabschnitt 10 hat, der sich von einem oberen Ende 2 der Nadelverschlussdüse 1 in einer Längsrichtung L in Richtung eines unteren Endes 3 erstreckt. Die Nadelverschlussdüse hat weiterhin einen unteren Materialrohrabschnitt 20, der sich in Längsrichtung L zwischen dem oberen Materialrohrabschnitt 10 und dem unteren Ende 3 der Nadelverschlussdüse 1 erstreckt. In dem Materialrohr 4 verläuft in Längsrichtung L ein Nadelkanal 5, worin eine Verschlussnadel 30 längsverschieblich angeordnet ist. In dem oberen Materialrohrabschnitt 10 verläuft ein separater Schmelzekanal 6 verläuft, der in den unteren Materialrohrabschnitt 20 übergeht. In dem unteren Materialrohrabschnitt 20 liegt ein separater Führungseinsatz 40 ein, welcher den Nadelkanal 5 fortsetzt. Der Führungseinsatz 40 ist mit dem Schmelzekanal 6 strömungsverbunden und weist einen eine Angussöffnung 21 bildenden Dichtabschnitt 23 auf. Der Dichtabschnitt 23 des Führungseinsatzes 40 ist durch die Verschlussnadel 30 formschlüssig abdichtbar.

**Bezugszeichenliste**

| | | | |
|---|---|---|---|
| 1 | Nadelverschlussdüse | 41 | Anlageflansch |
| 2 | oberes Ende | 42 | abgeflachte Seitenfläche |
| 3 | unteres Ende | | |
| 4 | Materialrohr | 50 | Kopfbereich |
| 5 | Nadelkanal | 51 | Flanschbereich |
| 6 | Schmelzekanal | 52 | oberes Gehäuse |
| 7 | Mündung | 53 | Fixierung |
| 8 | Formwerkzeug | 54 | Führungshülse |
| 9 | ringförmiger Spalt | 55 | Ring |
| | | 56 | Ringnut |
| 10 | oberer Materialrohrabschnitt | 57 | Dichtring |
| 12 | Hülse | | |
| 13 | erste Abflachung | 60 | oberer Bereich |
| 13a | zweite Abflachung | 61 | innerer Dichtring |
| 14 | erster Temperrierraum | 62 | untere Ringnut |
| 14a | zweiter Temperierraum | | |
| 15 | erster Fluidverbinder | 70 | unterer Bereich |
| 15a | zweiter Fluidverbinder | 71 | äußerer Dichtring |
| 16 | erster Zulauf | 72 | Hohlraum |
| 16a | zweiter Zulauf | 73 | äußere Ringnut |
| 17 | erster Ablauf | 74 | Ringspalt |
| 17a | zweiter Ablauf | | |
| | | L | Längsachse |
| 20 | unterer Materialrohrabschnitt | E | erste Ebene |
| 21 | Angussöffnung | X | Hub |
| 22 | Zuführungskanal | Y | Erstreckung |
| 23 | Dichtabschnitt | A | Abstand |
| 24 | Anlageausnehmung | | |
| 25 | Führungsabschnitt | | |
| 26 | Dichtungsgeometrie | | |
| 27 | Anspritzhülse | | |
| 28 | Befestigungsmittel | | |
| 29 | dritter Temperierraum | | |
| 30 | Verschlussnadel | | |
| 40 | Führungseinsatz | | |

## Patentansprüche

1. Nadelverschlussdüse (1) für ein Spritzgießwerkzeug, aufweisend
▪ ein zweigeteiltes Materialrohr (4) mit einem oberen Materialrohrabschnitt (10), der sich von einem oberen Ende (2) der Nadelverschlussdüse (1) in einer Längsrichtung (L) in Richtung eines unteren Endes (3) erstreckt, und
▪ mit einem unteren Materialrohrabschnitt (20), der sich in Längsrichtung (L) zwischen dem oberen Materialrohrabschnitt (10) und dem unteren Ende (3) der Nadelverschlussdüse (1) erstreckt,
▪ wobei der untere Materialrohrabschnitt (20) mittels Befestigungsmitteln (28) mit dem oberen Materialrohrabschnitt (10) lösbar verbunden ist und der untere Materialrohrabschnitt (20) von dem oberen Materialrohrabschnitt (10) über das untere Ende (3) entnehmbar ist,
▪ wobei in dem Materialrohr (4) in Längsrichtung (L) ein Nadelkanal (5) verläuft, in dem eine Verschlussnadel (30) längsverschieblich angeordnet ist, und wobei in dem Materialrohr (4) in Längsrichtung (L) und zumindest abschnittsweise separat von dem Nadelkanal (5) ein Schmelzekanal (6) verläuft,
**dadurch gekennzeichnet,**
▪ dass in dem unteren Materialrohrabschnitt (20) ein Führungseinsatz (40) für die Verschlussnadel (30) angeordnet ist, welcher den Nadelkanal (5) in Längsrichtung (L) fortsetzt,
▪ dass der Führungseinsatz (40) im unteren Materialrohrabschnitt (20) mit dem Schmelzekanal (6) strömungsverbunden ist, und
▪ dass der Führungseinsatz (40) an seinem freien Ende einen eine Angussöffnung (21) bildenden Dichtabschnitt (23) aufweist, der durch die Verschlussnadel (30) formschlüssig abdichtbar ist.

2. Nadelverschlussdüse (1) nach Anspruch 1, **dadurch gekennzeichnet, dass** der Führungseinsatz (40) einen Führungsabschnitt (25) aufweist, in dem die Verschlussnadel (30) zumindest teilweise längsverschieblich geführt ist.

3. Nadelverschlussdüse (1) nach Anspruch 2, **dadurch gekennzeichnet, dass** der Führungseinsatz (40) in Längsrichtung (L) zwischen dem Führungsabschnitt (25) und dem Dichtabschnitt (23) eine Mündung (7) für den Schmelzekanal (6) in den Nadelkanal (5) aufweist.

4. Nadelverschlussdüse (1) einem der vorhergehenden Ansprüche, **dadurch gekennzeichnet, dass** der Führungseinsatz (40) einen Anlageflansch (41) aufweist, der in einer Anlageausnehmung (24) des unteren Materialrohrabschnitts (20) einliegt.

5. Nadelverschlussdüse (1) nach einem der vorhergehenden Ansprüche, **dadurch gekennzeichnet, dass** der Nadelkanal (5) und der Schmelzekanal (6) in dem oberen Materialrohrabschnitt (10) exzentrisch angeordnet sind und eine erste Ebene (E) aufspannen.

6. Nadelverschlussdüse (1) nach Anspruch 5, **dadurch gekennzeichnet, dass** der obere Materialrohrabschnitt (10) mindestens eine in Längsrichtung (L) verlaufende Abflachung (13, 13a) aufweist, die senkrecht zu der ersten Ebene (E) steht.

7. Nadelverschlussdüse (1) nach Anspruch 6, **dadurch gekennzeichnet, dass** eine erste Abflachung (13) einen ersten Temperierraum (14) in der Nadelverschlussdüse (1) ausbildet.

8. Nadelverschlussdüse (1) nach Anspruch 7, **dadurch gekennzeichnet, dass** der erste Temperrierraum (14) parallel zur Längsrichtung (L) von dem oberen Materialrohrabschnitt (10) und von einer Hülse (12) begrenzt wird.

9. Nadelverschlussdüse (1) nach Anspruch 7 oder 8, **dadurch gekennzeichnet, dass** der erste Temperierraum (14) einen ersten Zulauf (16) und einen ersten Ablauf (17) aufweist.

10. Nadelverschlussdüse (1) nach Anspruch 6, **dadurch gekennzeichnet, dass** eine zweite Abflachung (13a) einen zweiten Temperierraum (14a) in der Nadelverschlussdüse (1) ausbildet.

11. Nadelverschlussdüse (1) nach Anspruch 10, **dadurch gekennzeichnet, dass** der zweite Temperrierraum (14a) einen zweiten Zulauf (16a) und einen zweiten Ablauf (17a) aufweist, wobei der zweite Ablauf (17a) einen zweiten Fluidverbinder (15a) aufweist, der an einem oberen Ende (2) der Nadelverschlussdüse angeordnet ist und der zweite Temperrierraum (14a) einen zweiten Zulauf (16a) aufweist, der an einem unteren Ende (3) des oberen Materialrohrabschnitts (10) angeordnet ist.

12. Nadelverschlussdüse (1) nach Anspruch 11, **dadurch gekennzeichnet, dass** der erste Ablauf (17) und der zweite Zulauf (16a) jeweils mit einem dritten Temperierraum (29) in dem unteren Materialrohrabschnitt (20) strömungsverbunden sind.

13. Nadelverschlussdüse (1) nach Anspruch 12, **dadurch gekennzeichnet, dass** der dritte Temperrierraum (29) als ein in Umfangsrichtung verlaufender Ringraum ausgebildet ist, der zwischen dem unteren Materialrohrabschnitt (20) und einer Anspritzhülse (27) angeordnet ist.

14. Nadelverschlussdüse (1) nach einem der Ansprüche 7 bis 13, **dadurch gekennzeichnet, dass** in dem unteren Materialrohrabschnitt (20) ein dritter Temperrierraum (29) separat zu dem ersten Temperrierraum (14) ausgebildet ist.

15. Nadelverschlussdüse (1) nach einem der Ansprüche 10 bis 14, **dadurch gekennzeichnet, dass** in dem unteren Materialrohrabschnitt (20) ein dritter Temperrierraum (29) separat zu dem zweiten Temperrierraum (14a) ausgebildet ist.

## Claims

1. Needle shut-off nozzle (1) for an injection moulding tool, having
- a two-part material pipe (4) with an upper material pipe portion (10), which extends from an upper end (2) of the needle shut-off nozzle (1) in a longitudinal direction (L) in the direction of a lower end (3), and
- with a lower material pipe portion (20), which extends in longitudinal direction (L) between the upper material pipe portion (10) and the lower end (3) of the needle shut-off nozzle (1),
- wherein the lower material pipe portion (20) is connected releasably by means of fastening means (28) with the upper material pipe portion (10) and the lower material pipe portion (20) can be removed from their upper material pipe portion (10) via the lower end (3),
- wherein in the material pipe (4) a needle channel (5) runs in longitudinal direction (L), in which needle channel a shut-off needle (30) is arranged so as to be longitudinally displaceable, and wherein in the material pipe (4) a melt channel (6) runs in longitudinal direction (L) and at least in some portions separately from the needle channel (5),
**characterised in**
- **that** in the lower material pipe portion (20) is arranged a guide insert (40) for the shut-off needle (30) which continues the needle channel (5) in longitudinal direction (L),
- **that** the guide insert (40) is flow-connected in the lower material pipe portion (20) with the melt channel (6), and
- **that** the guide insert (40) has on its free end a sealing portion (23) forming a pouring opening (21), which sealing portion can be sealed in a form-fitting manner by the shut-off needle (30).

2. Needle shut-off nozzle (1) according to claim 1, **characterised in that** the guide insert (40) has a guide portion (25) in which the shut-off needle (30) is guided at least partially in a longitudinally displaceable manner.

3. Needle shut-off nozzle (1) according to claim 2, **characterised in that**, in longitudinal direction (L) between the guide portion (25) and the sealing portion (23), the guide insert (40) has an opening (7) for the melt channel (6) into the needle channel (5).

4. Needle shut-off nozzle (1) any of the preceding claims, **characterised in that** the guide insert (40) has a bearing flange (41) which lies in a bearing recess (24) of the lower material pipe portion (20).

5. Needle shut-off nozzle (1) according to any of the preceding claims, **characterised in that** the needle channel (5) and the melt channel (6) are arranged eccentrically in the upper material pipe portion (10) and span a first plane (E).

6. Needle shut-off nozzle (1) according to claim 5, **characterised in that** the upper material pipe portion (10) has at least one flattening (13, 13a) extending in longitudinal direction (L), which stands perpendicularly to the first plane (E).

7. Needle shut-off nozzle (1) according to claim 6, **characterised in that** a first flattening (13) forms a first tempering space (14) in the needle shut-off nozzle (1).

8. Needle shut-off nozzle (1) according to claim 6, **characterised in that** the first tempering space (14) parallel to the longitudinal direction (L) is delimited by the upper material pipe portion (10) and by a sheath (12).

9. Needle shut-off nozzle (1) according to claim 7 or 8, **characterised in that** the first tempering space (14) has a first inlet (16) and a first outlet (17).

10. Needle shut-off nozzle (1) according to claim 6, **characterised in that** a second flattening (13a) forms a second tempering space (14a) in the needle shut-off nozzle (1).

11. Needle shut-off nozzle (1) according to claim 10, **characterised in that** the second tempering space (14a) has a second inlet (16a) and a second outlet (17a), wherein the second outlet (17a) has a second fluid connector (15a) which is arranged at an upper end (2) of the needle shut-off nozzle and the second tempering space (14a) has a second inlet (16a) which is arranged at a lower end (3) of the upper material pipe portion (10).

12. Needle shut-off nozzle (1) according to claim 11, **characterised in that** the first outlet (17) and the second inlet (16a) are flow-connected in each case with a third tempering space (29) in the lower material pipe portion (20).

13. Needle shut-off nozzle (1) according to claim 12, **characterised in that** the third tempering space (29) is in the form of an annular space running in circumferential direction, which is arranged between the lower material pipe portion (20) and an injection sleeve (27).

14. Needle shut-off nozzle (1) according to any of claims 7 to 13, **characterised in that** in the lower material pipe portion (20) is formed a third tempering space (29) separate from the first tempering space (14).

15. Needle shut-off nozzle (1) according to any of claims 10 to 14, **characterised in that** in the lower material pipe portion (20) is formed a third tempering space (29) separate from the second tempering space (14a).

## Revendications

1. Buse de fermeture à aiguille (1) pour un outil de moulage par injection, présentant
- un tube de matériau en deux parties (4) avec une section supérieure de tube de matériau (10) qui s'étend d'une extrémité supérieure (2) de la buse de fermeture à aiguille (1) dans une direction longitudinale (L) en direction d'une extrémité inférieure (3), et
- avec une section inférieure de tube de matériau (20) qui s'étend dans la direction longitudinale (L) entre la section supérieure de tube de matériau (10) et l'extrémité inférieure (3) de la buse de fermeture à aiguille (1),
- dans laquelle la section inférieure de tube de matériau (20) est reliée de manière détachable à la section supérieure de tube de matériau (10) par l'intermédiaire de moyens de fixation (28) et la section inférieure de tube de matériau (20) peut être retirée de la section supérieure de tube de matériau (10) via l'extrémité inférieure (3),
- dans laquelle un canal d'aiguille (5) s'étend dans le tube de matériau (4) dans la direction longitudinale (L), dans lequel une aiguille de fermeture (30) est agencée de manière à pouvoir être déplacée longitudinalement, et
dans laquelle un canal de fusion (6) s'étend dans le tube de matériau (4) dans la direction longitudinale (L) et au moins par sections séparément du canal d'aiguille (5),
**caractérisée**
- **en ce qu'**un insert de guidage (40) pour l'aiguille de fermeture (30) est agencé dans la section inférieure de tube de matériau (20), lequel prolonge le canal d'aiguille (5) dans la direction longitudinale (L),
- **en ce que** l'insert de guidage (40) est relié par écoulement au canal de fusion (6) dans la section inférieure de tube de matériau (20), et
- **en ce que** l'insert de guidage (40) présente, à son extrémité libre, une section d'étanchéité (23) formant une ouverture de coulée (21), qui peut être rendue étanche par complémentarité de forme par l'aiguille de fermeture (30).

2. Buse de fermeture à aiguille (1) selon la revendication 1, **caractérisée en ce que** l'insert de guidage (40) présente une section de guidage (25) dans laquelle l'aiguille de fermeture (30) est au moins partiellement guidée de manière à pouvoir être déplacée longitudinalement.

3. Buse de fermeture à aiguille (1) selon la revendication 2, **caractérisée en ce que** l'insert de guidage (40) présente une embouchure (7) pour le canal de fusion (6) dans le canal d'aiguille (5) dans la direction longitudinale (L) entre la section de guidage (25) et la section d'étanchéité (23).

4. Buse de fermeture à aiguille (1) une quelconque des revendications précédentes, **caractérisée en ce que** l'insert de guidage (40) présente une bride de butée (41) qui s'engage dans une cavité de butée (24) de la section inférieure de tube de matériau (20).

5. Buse de fermeture à aiguille (1) selon l'une quelconque des revendications précédentes, **caractérisée en ce que** le canal d'aiguille (5) et le canal de fusion (6) sont agencés de manière excentrée dans la section supérieure de tube de matériau (10) et s'étendent sur un premier plan (E).

6. Buse de fermeture à aiguille (1) selon la revendication 5, **caractérisée en ce que** la section supérieure de tube de matériau (10) présente au moins un aplatissement (13, 13a) s'étendant dans la direction longitudinale (L), qui est perpendiculaire au premier plan (E).

7. Buse de fermeture à aiguille (1) selon la revendication 6, **caractérisée en ce qu'un** premier aplatissement (13) réalise une première chambre thermorégulatrice (14) dans la buse de fermeture à aiguille (1).

8. Buse de fermeture à aiguille (1) selon la revendication 7, **caractérisée en ce que** la première chambre thermorégulatrice (14) est délimitée parallèlement à la direction longitudinale (L) par la section supérieure de tube de matériau (10) et par un manchon (12).

9. Buse de fermeture à aiguille (1) selon la revendication 7 ou 8, **caractérisée en ce que** la première chambre thermorégulatrice (14) présente une première entrée (16) et une première sortie (17).

10. Buse de fermeture à aiguille (1) selon la revendication 6, **caractérisée en ce qu'un** second aplatissement (13a) réalise une deuxième chambre thermorégulatrice (14a) dans la buse de fermeture à aiguille (1).

11. Buse de fermeture à aiguille (1) selon la revendication 10, **caractérisée en ce que** la deuxième chambre thermorégulatrice (14a) présente une seconde entrée (16a) et une seconde sortie (17a), dans laquelle la seconde sortie (17a) présente un second connecteur de fluide (15a) qui est agencé à une extrémité supérieure (2) de la buse de fermeture à aiguille et la deuxième chambre thermorégulatrice (14a) présente une seconde entrée (16a) qui est agencée à une extrémité inférieure (3) de la section supérieure de tube de matériau (10).

12. Buse de fermeture à aiguille (1) selon la revendication 11, **caractérisée en ce que** la première sortie (17) et la seconde entrée (16a) sont respectivement reliées par écoulement à une troisième chambre thermorégulatrice (29) dans la section inférieure de tube de matériau (20).

13. Buse de fermeture à aiguille (1) selon la revendication 12, **caractérisée en ce que** la troisième chambre thermorégulatrice (29) est réalisée comme une chambre annulaire s'étendant circonférentiellement, qui est agencée entre la section inférieure de tube de matériau (20) et un manchon d'injection (27).

14. Buse de fermeture à aiguille (1) selon l'une quelconque des revendications 7 à 13, **caractérisée en ce qu'une** troisième chambre thermorégulatrice (29) est réalisée dans la section inférieure de tube de matériau (20) séparément par rapport à la première chambre thermorégulatrice (14).

15. Buse de fermeture à aiguille (1) selon l'une quelconque des revendications 10 à 14, **caractérisée en ce qu'une** troisième chambre thermorégulatrice (29) est réalisée dans la section inférieure de tube de matériau (20) séparément par rapport à la deuxième chambre thermorégulatrice (14a).
